(19) Europäisches Patentamt / European Patent Office / Office européen des brevets

(11) **EP 1 835 444 B1**

(12) **FASCICULE DE BREVET EUROPEEN**

(45) Date de publication et mention de la délivrance du brevet:
**04.11.2009 Bulletin 2009/45**

(51) Int Cl.:
*G06K 9/62* (2006.01)

(21) Numéro de dépôt: **07103995.2**

(22) Date de dépôt: **13.03.2007**

(54) **Méthode pour fusionner des OCR postaux exploitant des fonctions de croyance**

Methode zur Zusammenlegung von OCR-Vorgängen bei Postsendungen durch Nutzung der Belief-Funktionen

Method of merging postal OCR using belief functions

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **17.03.2006 FR 0650910**

(43) Date de publication de la demande:
**19.09.2007 Bulletin 2007/38**

(73) Titulaire: **Solystic**
**94257 Gentilly Cedex (FR)**

(72) Inventeurs:
  • **Mercier, David**
    **60200 COMPIEGNE (FR)**
  • **Benyoub, Belkacem**
    **91120 PALAISEAU (FR)**
  • **Cron, Geneviève**
    **75012 PARIS (FR)**

(74) Mandataire: **Prugneau, Philippe**
**Cabinet Prugneau-Schaub**
**3 avenue Doyen Louis Weil**
**Le Grenat - EUROPOLE**
**38000 Grenoble (FR)**

(56) Documents cités:
US-A- 5 970 171      US-A1- 2002 186 864
US-A1- 2004 005 080      US-A1- 2004 218 783
US-B1- 6 269 171

• MERCIER D ET AL: "Fusion of multi-level decision systems using the Transferable Belief Model" INFORMATION FUSION, 2005 7TH INTERNATIONAL CONFERENCE ON PHILADELPHIA, PA, USA 25-28 JULY 2005, PISCATAWAY, NJ, USA,IEEE, 25 juillet 2005 (2005-07-25), pages 885-892, XP010892681 ISBN: 0-7803-9286-8
• XU L ET AL: "METHODS OF COMBINING MULTIPLE CLASSIFIERS AND THEIR APPLICATIONS TO HANDWRITING RECOGNITION" IEEE TRANSACTIONS ON SYSTEMS, MAN AND CYBERNETICS, IEEE INC. NEW YORK, US, vol. 22, no. 3, mai 1992 (1992-05), pages 418-435, XP000828478 ISSN: 0018-9472
• P. SMETS: "Data fusion in the Transferable belief model" PROCEEDINGS OF THE THIRD INTERNATIONAL CONFERENCE ON INFORMATION FUSION, 2000, vol. 1, 10 juillet 2000 (2000-07-10), pages PS21-PS33, XP002409558
• BLOCH I ED - BLOCH I (ED): "Fusion d'informations en traitement du signal et des images, PASSAGE" FUSION D'INFORMATIONS EN TRAITEMENT DU SIGNAL ET DE IMAGES, PARIS : HERMES SCIENCE PUBLICATIONS, FR, 2003, pages 119-138, XP002409559 ISBN: 2-7462-0628-5

EP 1 835 444 B1

**Description**

L'invention concerne le décodage d'images pour une lecture automatique d'information et en particulier le décodage d'images d'envois postaux pour une lecture automatique des adresses d'acheminement et/ou de distribution inscrites sur des envois postaux.

Le décodage d'images d'envois postaux est généralement réalisé par un traitement de reconnaissance optique de caractères (OCR).

Une lecture d'adresses dans une application de traitement postal est construite autour de quatre grandes opérations : localisation du bloc d'adresse dans l'image de l'envoi, binarisation du bloc d'adresse, traitement OCR et extraction dans les bases de données d'adresses postales valides.

En résumé, la localisation du bloc d'adresse consiste à trouver dans l'image d'une face d'un envoi le bloc d'adresse du destinataire de l'envoi.

La binarisation de l'image consiste à transformer une image qui est en multi-niveaux de gris en une image binaire.

Le traitement OCR consiste à extraire de l'image binaire les caractères alphanumériques sous la forme de chaînes de caractères correspondant à des champs du bloc d'adresse.

L'extraction dans les bases de données d'adresses postales valides consiste à vérifier l'analogie entre l'adresse ou les parties d'adresse extraites de l'image binaire par traitement OCR et une adresse ou des parties d'adresse présentes dans les bases de données pour fournir un résultat de décodage avec une fiabilité raisonnable.

Ces différents processus de traitements de données qui s'enchaînent dans un lecteur d'adresses postales seront par la suite regroupés sous le vocable général de OCR postal. L'OCR postal est évidemment précédé dans le lecteur d'adresses d'une prise d'image d'une face d'un envoi postal à la suite de quoi l'image numérique de l'envoi est disponible pour l'OCR postal.

En considérant la complexité d'un OCR postal et le haut degré de variabilité d'une adresse postale sur la face d'un envoi, la fiabilité des résultats produits en sortie d'un OCR postal peut varier d'une façon très importante.

Dans le tri postal automatique, on cherche généralement à atteindre les deux critères de performance que sont le taux de lecture et le taux d'erreur.

Le taux de lecture est une grandeur statistique qui exprime la proportion de lectures d'adresse, correspondant effectivement à l'adresse sur l'envoi, sur un certain nombre d'envois traités. Le taux d'erreur est une grandeur statistique qui exprime la proportion d'adresses reconnues automatiquement mais qui sont erronées et qui nécessitent donc in fine un traitement manuel. Ces deux critères de performance peuvent être différents d'une application postale à une autre et/ou d'un Opérateur postal à un autre et/ou d'un pays à un autre.

Généralement pour décoder automatiquement les images d'envois postaux, on fait passer ces images dans un seul OCR postal. Toutefois, pour assurer une lecture/décodage encore plus fiable des adresses des envois postaux, on a déjà pensé à faire travailler plusieurs OCR postaux dans un même système de décodage d'adresses postales (c'est-à-dire dans une même machine de tri postal).

Le fait d'utiliser les résultats de plusieurs OCR postaux pour la lecture d'adresses est un principe connu pour tenter d'améliorer les deux critères de performance ci-dessus et de façon plus générale la fiabilité du décodage.

On distingue dans la littérature courante les systèmes avec mise en série de plusieurs OCR postaux et les systèmes avec mise en parallèle de plusieurs OCR postaux.

Dans un fonctionnement de mise en série de plusieurs OCR postaux, une image d'un envoi postal est soumise à un premier, puis à un second puis à un troisième OCR postal si respectivement le premier puis le second OCR postal ne parvient pas à lire/décoder automatiquement l'image. Si l'image est effectivement décodée complètement par un des OCR postaux, un résultat de décodage sous la forme d'une adresse postale (plus exactement un code d'indexation correspondant à cette adresse postale) est produit en sortie du système multi-OCR postaux série.

Bien que ce principe de fonctionnement en série de plusieurs OCR postaux puisse améliorer la fiabilité du décodage, il ne permet pas d'augmenter le taux de lecture et de diminuer le taux d'erreur dans des proportions toujours satisfaisantes. La limite de ce système réside plus particulièrement dans le fait que les OCR postaux en série peuvent imposer un temps de traitement global trop important pour les contraintes temps réel d'une application postale. Par ailleurs, l'ajout d'un OCR postal supplémentaire dans un tel système est relativement complexe et donc coûteux. Dans le document de brevet EP-1594077, on décrit ainsi une méthode pour décoder des images d'envois postaux utilisant plusieurs OCR postaux qui fonctionnent en série.

Dans un fonctionnement de plusieurs OCR postaux mis en parallèle, les résultats respectifs de décodage produits par les OCR postaux sont regroupés dans le but de déterminer celui des résultats qui est le plus fiable pour décoder l'adresse d'un envoi.

Ainsi, il existe des systèmes de lecture/décodage d'adresses postales dont les sorties des OCR postaux sont branchées sur un dispositif de vote. Le dispositif de vote considère tous les résultats produits en parallèle par les OCR postaux pour une image d'entrée donnée et produit un résultat final sur la base d'une règle de majorité. La limite de ce principe est que sur trois OCR postaux en parallèle, il faut que deux OCR postaux produisent le même résultat de décodage pour satisfaire une règle de majorité.

Avec ce principe, il n'est pas toujours facile d'obtenir un taux de lecture satisfaisant. Dans le document de brevet WO2005/050545, on décrit ainsi une méthode pour décoder des images d'envois postaux utilisant plusieurs OCR postaux qui collaborent en parallèle, typiquement deux ou plus de deux OCR postaux. Le principe décrit consiste à affecter à chaque traitement OCR une valeur de performance. Ces valeurs de performances sont maintenues dans une table pré-établie par apprentissage. On part du principe que les images d'envois postaux soumises aux traitements OCR peuvent être classées selon des catégories prédéfinies se rapportant au type d'envoi postal (lettre, objet plat, lettre avec fenêtre translucide, ...), aux caractéristiques de l'écriture de l'adresse postale (adresse postale en manuscrit, en caractères de machine d'impression à aiguille, en couleur, ....), aux caractéristiques de présentation du bloc d'adresse (bloc incliné, ....)., etc.... On considère ainsi dans ce document que la performance d'un traitement OCR peut varier en fonction des caractéristiques intrinsèques du courrier. Dans le document de brevet WO2005/050545, on soumet préalablement des images test d'envois postaux aux OCR postaux en relevant à chaque fois à partir de l'image la catégorie du type d'envoi et le résultat de décodage produit par le traitement OCR considéré. On peut affecter ainsi à chaque OCR postal des valeurs de performance pour les différentes catégories d'envois postaux. En opérationnel, il est possible à partir d'une table regroupant les valeurs de performance des OCR postaux de pondérer par catégorie les résultats produits en parallèle par ces OCR postaux et donc produire un résultat final qui fusionne en quelque sorte les résultats produits individuellement par les OCR postaux.

Toutefois, dans ce système connu de décodage d'images d'envois postaux, le résultat final reste identique au résultat produit par un des traitements OCR en parallèle.

On connaît également du document de brevet US5970171 une méthode de fusion des résultats produits par des systèmes intelligents de reconnaissance de chaîne de caractères exploitant des fonctions de croyance. Toutefois, cette méthode ne fournit pas un décodage suffisamment fiable. Dans la publication de International Conference ou Information Fusion du 28 juillet 2005 au nom de David Mercier, on présente l'utilisation de fonctions de croyance pour la reconnaissance de caractères. Toutefois dans le cas de la reconnaissance d'adresses postales on a affaire à une gestion de sous-ensembles d'une bien plus grande cardinalité que pour la reconnaissance de caractères.

Un but de l'invention est de proposer une méthode pour le décodage d'images d'envois postaux avec plusieurs traitements OCR postaux fonctionnant en parallèle, par exemple deux ou plus de deux OCR postaux, qui permet d'obtenir une véritable fusion des résultats respectifs produits par les différents traitements OCR de sorte à améliorer encore plus la fiabilité du décodage.

Un autre but de l'invention est encore de proposer une telle méthode qui offre une plus grande possibilité de réglage du taux de lecture et du taux d'erreur du système multi-OCR postaux.

Un autre but de l'invention est encore de proposer une telle méthode selon laquelle il est facile d'ajouter un OCR postal supplémentaire dans un système multi-OCR postaux, y compris en mélangeant des OCR-postaux ayant des origines différentes.

L'idée à la base de l'invention est d'exploiter le Modèle des Croyances Transférables (MCT) tel que décrit dans le document intitulé "Fusion of multi-level decision systems using the Transferable Belief Model" de 2005 7th International conference on information Fusion (Fusion)", pour réaliser une véritable fusion des résultats produits en sortie par les OCR postaux en tirant profit du fait qu'il est possible de mesurer, par un apprentissage supervisé, les performances d'un OCR postal en termes de taux de lecture, taux d'erreur (ou taux de substitution) et taux de rejets en correspondance avec des niveaux de décision de l'OCR postal.

Le MCT est une interprétation non probabiliste de la théorie de Dempster-Shafer, au sens où aucune mesure de probabilité n'est sous-entendue dans la modélisation des informations. Il permet de gérer des informations aussi bien incertaines qu'imprécises, et fournit nombre d'outils pour la combinaison d'informations.

Le MCT a fait l'objet d'une littérature abondante et on pourra par exemple se reporter à l'article intitulé « The Transferable Belief Model » de SMETS P., KENNES R., paru dans la revue « Artificial Intelligence », vol 66, 1994, pp. 191-243.

<u>1- Les concepts de base du MCT :</u>

Dans le cadre du MCT, deux niveaux mentaux sont distingués dans la modélisation du raisonnement de l'agent rationnel en charge de la fusion :

- le niveau crédal, où sont représentées et manipulées les informations disponibles ;
- et le niveau pignistique ou décisionnel, siège de la construction de la décision de l'agent, lorsque ce dernier doit agir.

<u>2- La représentation des connaissances :</u>

Soit X une variable à valeurs dans un ensemble fini $\Omega = \{\omega_1, \omega_2, ..., \omega_K\}$, appelé cadre de discernement ou univers.

La connaissance tenue par un agent rationnel Ag, de base de connaissance BC, quant à la valeur $\omega_0$ effectivement prise par X, peut être quantifiée par une fonction de croyance ou fonction de masse (en anglais, une BBA pour « Basic Belief Assignment ») définie sur l'ensemble des parties de $\Omega$ (noté $2^\Omega$), à valeurs dans [0, 1], et vérifiant :

$$\sum_{A \subseteq \Omega} m^\Omega_{Ag} [BC]\{X\}(A) = 1.$$

m(A) représente la part de croyance de Ag sur le fait « $\omega_0$ appartient à A », et m(A) > 0 n'implique pas de masses strictement positives sur des sous-ensembles plus restreints de A, ce qui permet une modélisation adéquate de connaissances partielles. Par exemple, la fonction de masse vide définie par m($\varnothing$) = 1 représente l'ignorance totale, la masse portée par tout sous-ensemble strict de $\Omega$ est nulle. Un élément A de $2^\Omega$ est appelé élément focal si et seulement si m(A) > 0.

En l'absence d'ambiguïtés, la notation $m^\Omega_{Ag} [BC]\{X\}$ sera simplifiée en $m^\Omega_{Ag}$, $m_{Ag}$, ou même m.

A noter aussi que, dans le MCT, les fonctions de masse ne sont pas forcément normalisées, i.e., nous pouvons avoir m($\varnothing$) > 0.

Une fonction de masse m est en bijection avec

une fonction de croyance bel : $2^\Omega \to [0, 1]$ et
une fonction de plausibilité pl : $2^\Omega \to [0, 1]$
définies, respectivement, par :

$$bel(A) = \sum_{\varnothing \neq B \subseteq A} m(B),$$

et

$$pl(A) = \sum_{B \cap A \neq \varnothing} m(B), \text{ pour tout } A \subseteq \Omega.$$

(ces fonctions représentent la même information)

3- Manipulation des informations :

Un des grands intérêts de la théorie des fonctions de croyance pour la fusion d'informations, réside dans le large spectre d'outils offert pour manipuler les fonctions de croyance : celles ci peuvent en effet être conditionnées, déconditionnées, marginalisées, étendues, affaiblies, renforcées, ou combinées entre elles.

Deux fonctions de masse, $m_1$ et $m_2$, distinctes (c'est-à-dire basées sur des connaissances distinctes, ce terme est à rapprocher de la notion d'indépendance en probabilité) et fiables peuvent être combinées en utilisant la règle de combinaison conjonctive définie par :

$$m_1 \cap m_2 (A) = \sum_{B \cap C = A} m_1(B) \, m_2(C), \, \forall A \subseteq \Omega$$

4- Prise de décision :

Lorsqu'une décision doit être prise, des principes de rationalité justifient la stratégie consistant à choisir l'action parmi un ensemble exhaustif d'actions A, qui minimise le risque calculé par la relation suivante :

$$\rho(\alpha) = \sum_{\omega \in \Omega} c(\alpha, \omega) P^\Omega(\{\omega\})$$

où $P^\Omega: 2^\Omega \to [0, 1]$ est une mesure de probabilité et $c : A \times \omega) \to IR$ une fonction de coût. À ce niveau, la fonction de croyance obtenue après combinaison doit donc être transformée en une mesure de probabilité. Une solution consiste à utiliser la transformation pignistique en calculant la probabilité pignistique :

$$ BetP(\{\omega\}) = \sum_{\{A \subseteq \Omega, \omega \in A\}} \frac{m(A)}{(1 - m(\theta))|A|} $$

L'invention a donc pour objet une méthode pour décoder des adresses postales sur des images d'envois postaux avec plusieurs traitements OCR postaux en parallèle, comprenant les étapes de la revendication 1.

La méthode selon l'invention réalise une véritable fusion des résultats produits par les différents traitements OCR, améliorant ainsi la fiabilité du décodage.

L'invention s'étend également à un système pour pour décoder des adresses postales sur des images d'envois postaux incluant plusieurs traitements OCR postaux en parallèle qui peut comprendre les particularités suivantes :

- les OCR postaux font partie d'un même lecteur d'adresses postales incluant une caméra pour former une image d'un envoi postal courant ;
- plusieurs lecteurs d'adresses postales incluant chacun une caméra et un OCR postal.

Les Postes demandent, pour le courrier dactylographié comme pour le courrier manuscrit, un taux de lecture très élevé en acheminement et assez élevé en distribution, tandis que le taux d'erreur doit rester très faible. Avec la méthode selon l'invention, on a observé qu'il est possible de récupérer en lecture environ 20 à 25% des envois mis en rejet sur un lot d'envois postaux traités par un décodage d'adresses classique de sorte que la méthode selon l'invention contribue à augmenter de façon significative le taux de lecture à taux d'erreur constant. Par conséquent, la méthode selon l'invention permet de réduire dans les mêmes proportions le codage par un opérateur humain.

L'invention sera mieux comprise à la lecture de la description qui suit en relation avec les dessins.

La figure 1 illustre une hiérarchie de niveaux de décision d'un lecteur d'adresses postales pour du courrier en France.
La figure 2 illustre de façon schématique les étapes de la méthode selon l'invention avec un exemple simple.
La figure 3 illustre un partitionnement du cadre de discernement.
La figure 4 illustre des coûts de rejet et des coûts d'erreur.
La figure 5 illustre de façon schématique les étapes de la méthode de construction d'une matrice de confusion.
La figure 6 illustre de façon schématique les étapes d'un mode de réalisation particulier de la méthode selon l'invention dans lequel les OCR postaux fournissent des scores de fiabilité.

Niveaux de décision

En France, un OCR postal produit en sortie un résultat d'adresse postale sous la forme d'un code d'indexation normalisé à 12 caractères en 3 parties.

La première partie du code d'indexation composée des 2 premiers caractères sert à coder le pays de destination d'un envoi postal ou encore un descripteur du contenu des 2 autres parties du code.

La seconde partie du code composée des 5 caractères suivants sert à coder un code postal. Cette seconde partie du code d'indexation concerne le tri-acheminement.

La troisième partie du code composée des 5 derniers caractères sert à coder le reste de l'adresse géographique de destination de l'envoi postal. Ces 5 derniers caractères peuvent servir à coder une rue (avec ou sans le numéro de pas de porte) ou une boîte postale et assimilés comme TSA (Tri Service Arrivé), Autorisation (adresse temporaire), etc. Cette troisième partie du code d'indexation concerne le tri-distribution.

Mais le résultat d'adresse postale produit par un OCR postal est généralement plus complexe qu'un seul code d'indexation. Il peut comprendre, en plus du code d'indexation filtré, plusieurs autres codes d'indexation (appelés encore solutions non filtrées) accompagnés ou non de taux de confiance ou scores. Il peut également comprendre une adresse postale complète c'est-à-dire avec des champs du bloc d'adresse qui sont renseignés chacun avec une valeur unique ou avec des valeurs multiples, laquelle ou lesquelles valeurs peuvent être associées à des taux de confiance. Il peut comprendre encore des informations relatives au déroulement du décodage de l'adresse postale dans l'OCR postal ou à des caractéristiques reconnues du courrier comme le type d'écriture de l'adresse (manuscrite, dactylographiée), la position/orientation du bloc d'adresse, etc...

La reconnaissance complète d'une adresse postale dans une image d'un envoi postal étant une tâche complexe, un OCR postal peut également fournir un résultat partiel, c'est-à-dire un code d'indexation incomplet pouvant couvrir plusieurs adresses postales possibles. Par exemple, si un OCR postal est arrivé à décoder de façon non ambiguë la ville de l'adresse du destinataire d'un envoi mais pas la rue de cette adresse, alors il est possible pour cet OCR postal de produire un code d'indexation qui reflète une décision sur la ville et un "rejet sur la rue". Le code d'indexation est produit avec les 5 caractères de la seconde partie du code qui sont renseignés par un code postal (par exemple 60200), les 5 autres caractères de la troisième partie du code d'indexation étant renseignés par une valeur symbolique, par exemple «-- ? --» qui identifie une décision de rejet rendue par l'OCR postal.

Selon l'invention, on catégorise un résultat d'adresse postale produit par un OCR postal, qu'il soit simplement un code d'indexation complet ou partiel, ou qu'il soit plus complexe comme indiqué plus haut, à partir d'une hiérarchie ou arborescence géographique de distribution postale définissant des niveaux de décision.

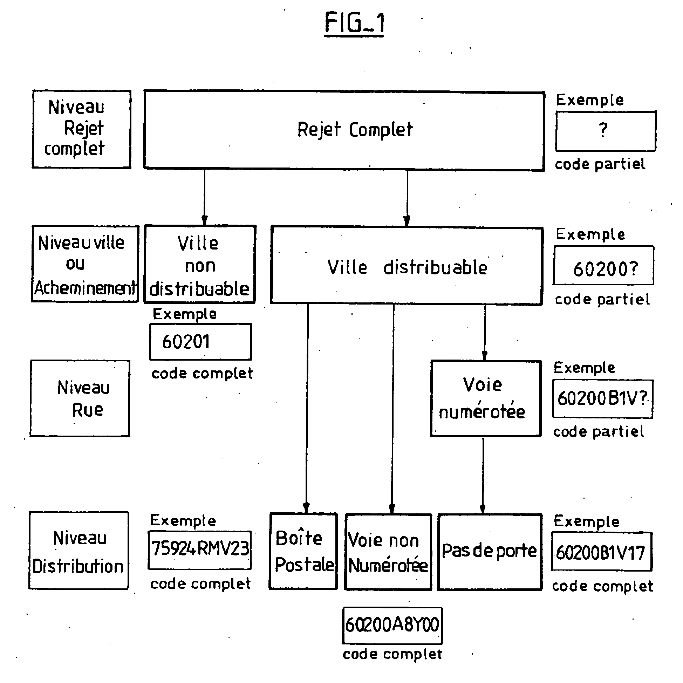

Sur la figure 1, on a illustré une hiérarchie ou arborescence géographique de distribution postale pour la France à plusieurs niveaux de décision ordonnés selon leurs profondeurs de décision, en allant du niveau supérieur de la hiérarchie au niveau le plus bas de la hiérarchie. On a donc représenté un niveau « Rejet complet », un niveau « Ville ou Acheminent », un niveau « Rue » et un niveau « Distribution ».

A chaque niveau de décision de la hiérarchie, on a représenté dans des blocs des catégories ou types de décision.

Dans le cas de la figure 1, au niveau « Ville » on a représenté deux catégories de décision « Ville non Distribuable » et « Ville Distribuable ». Au niveau « Rue » on a représenté une catégorie de décision « Voie Numérotée ». Enfin au niveau « Distribution » on a représenté les catégories de décision « Boîte Postale », « Voie non Numérotée » et « Pas de porte ». On a également représenté la catégorie de niveau le plus haut dans la hiérarchie qui est la catégorie « Rejet complet ». Pour chaque catégorie de décision, on a illustré sur la figure 1, un exemple de code d'indexation produit par un OCR postal. Pour des raisons de clarté, on a représenté uniquement la deuxième et la troisième partie du code d'indexation. Dans la suite de l'exemple de réalisation, on ne prendra pas en compte la partie du code d'indexation correspondant à l'information pays. Evidemment, la méthode selon l'invention peut être adaptée à une hiérarchie géographique de distribution postale différente.

Ainsi, une ville peut être distribuable par le facteur ou non. Dans le premier cas, l'adresse doit comporter un lieu de distribution pour le facteur en plus de l'indication d'un code postal correspondant à la ville. Dans le second cas, le code postal servant de code acheminement suffit, il n'est pas nécessaire de récupérer des informations de distribution pour le facteur.

En distribution du courrier, on distingue deux types de voies : les voies numérotées et les voies non numérotées. Dans le premier cas, il est nécessaire d'identifier la voie et le numéro dans la voie ou pas de porte pour pouvoir effectuer une distribution du courrier par le facteur. Dans le second cas, l'identification de la voie suffit pour effectuer la distribution du courrier par le facteur (tous les pas de porte de cette voie conduisent au même code distribution).

Par exemple à supposer que sur un envoi postal soit écrite l'adresse "17 rue Solférino 60200 Compiègne".

La base de données des adresses valides qui est utilisée par un OCR postal fournit comme information que le point d'acheminement "60200 Compiègne" est distribuable et la "rue Solférino" est numérotée. En accord avec la hiérarchie de la figure 1, un OCR postal pourra alors produire l'une des décisions/résultats suivantes :

- " ? ", c'est-à-dire, un rejet complet : le code acheminement n'a pu être identifié par l'OCR ; ce qui correspond à la catégorie de décision « Rejet complet » du niveau de décision « Rejet complet » ;
- " 60200 ? " : l'OCR a bien reconnu 60200 Compiègne mais n'a pas réussi à déterminer la voie ; ce qui correspond à la catégorie de décision « Ville Distribuable » du niveau de décision « Ville » ou « Acheminement »
- " 60201 " : l'OCR a bien reconnu l'adresse 60201 Compiègne cedex sur l'envoi postal ce qui correspond à la catégorie de décision « Ville Non Distribuable » du niveau de décision « Ville » ou « Acheminement », c'est-à-dire que l'adresse de type cedex est complète même sans information de niveau « Rue » ou de niveau « Distribution », le code d'indexation est donc complet ;
- " 60200 B1V ? " : l'OCR a bien reconnu la ville et la voie mais le numéro de pas de porte dans la voie compte dans la sanction finale et l'OCR n'a pas réussi à déterminer ce numéro, le code d'indexation est donc partiel ; ce qui correspond à la catégorie « Voie Numérotée » du niveau de décision «Rue»;
- " 60200 B1V17 " : l'OCR a déterminé une adresse complète et produit donc un code d'indexation complet ; ce qui correspond à la catégorie « Pas de Porte» du niveau de décision « Distribution » ;
- " 60200 A8YOO " l'OCR a déterminé la ville et la voie, et un accès à la base de données d'adresse valide révèle que la voie est non numérotée, c'est-à-dire que n'importe quel pas de porte de cette voie sera associé à ce code ; ce qui correspond à la catégorie « Voie Non Numérotée » du niveau de décision « Distribution » ;
- " 75924 RMV23 " l'OCR a déterminé la ville, la voie et une information de type boîte postale, l'adresse et le code d'indexation sont donc complets même sans information relative au pas de porte ; ce qui correspond à la catégorie « Boîte Postale » du niveau de décision « Distribution » ;

Génération des fonctions de croyance

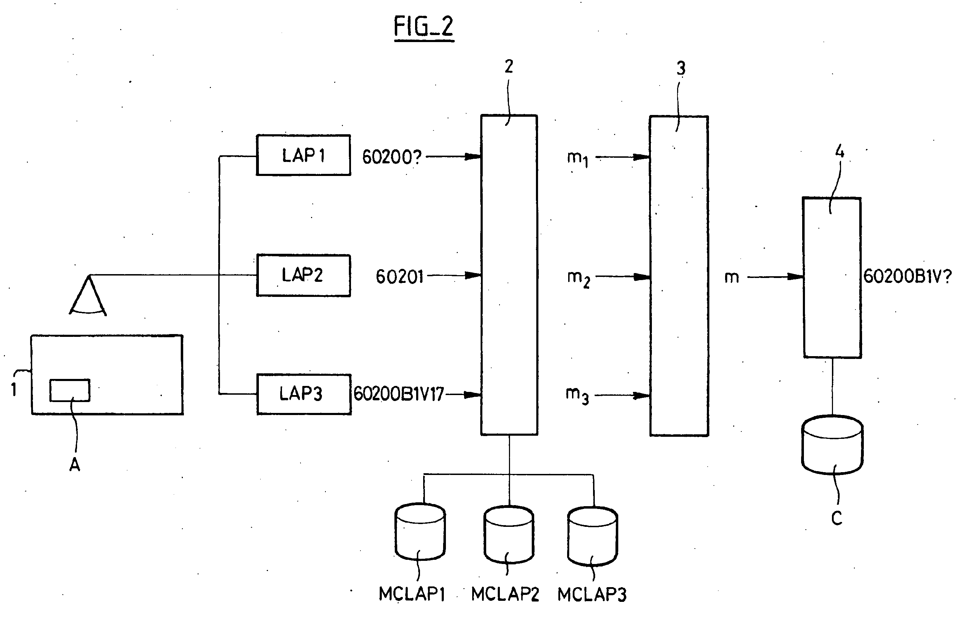

Sur la figure 2, on a représenté les étapes de la méthode selon l'invention conduisant à une fusion des résultats individuels d'adresse postale produits par les OCR en parallèle.

Une image de la face d'un envoi postal tel que 1 qui comporte une information d'adresse A est soumise ici à trois OCR postaux LAP1, LAP2 et LAP3 agencés pour produire en parallèle des résultats d'adresse postale. Dans le cas d'exemple, ces résultats sont trois codes d'indexation complets ou partiels.

A partir de ces résultats d'adresse postale, on génère dans le bloc 2 des fonctions de croyance indiquées par m1, m2, m3.

Ces fonctions de croyance sont ensuite combinées dans le bloc 3 pour générer une fonction de croyance résultante indiquée par m.

Dans le bloc 4, à partir de valeurs de coûts C représentatives des coûts de distribution postale et d'une transformation en probabilité de cette fonction de croyance résultante m, on calcule un résultat global d'adresse postale sous la forme d'un code d'indexation résultant.

On doit comprendre à ce stade que la méthode selon l'invention pourrait être mise en oeuvre avec deux OCR ou plus de trois OCR postaux sans sortir du cadre de l'invention.

Il est entendu que les OCR postaux fonctionnent sur une même hiérarchie de distribution postale (c'est à dire encore sur une même construction d'adresse postale) mais que le résultat global d'adresse postale qui est construit par la fusion dans les blocs 2, 3 et 4 n'est pas forcément identique à l'un des résultats produits par les OCR postaux.

Dans le bloc 2 de la figure 2, les résultats d'adresse postale produits en sortie des OCR postaux sont d'abord catégorisés à partir des niveaux de décision de la hiérarchie postale selon des catégories de décision illustrées sur la figure 1.

Dans l'exemple de la figure 2, l'OCR LAP1 produit le code d'indexation partiel « 60200 ? » qui est de la catégorie ou du type de décision « Ville Distribuable » du niveau de décision « acheminement ».

L'OCR LAP2 produit le code d'indexation « 60201 » qui est du type « Ville non distribuable » du niveau de décision « acheminement ».

L'OCR LAP3 produit le code d'indexation « 60200 B1V17 » qui est du type « Pas de Porte » du niveau de décision «distribution ».

Il faut comprendre que la catégorisation d'un résultat d'OCR postal peut être plus raffinée que ce qui est illustré sur la figure 1. Plus particulièrement, la catégorisation peut également prendre en compte des caractéristiques intrinsèques du courrier (adresse manuscrite, adresse dactylographiée, position du bloc d'adresse, courrier sous enveloppe en plastique ou sous enveloppe en papier, etc...). Par exemple une catégorie peut être ville distribuable, courrier dactylographié, bloc situé dans une zone particulière, etc.... au lieu de la catégorie basée uniquement sur la hiérarchie de distribution postale. Dans tous les cas, chaque décision produite par un des OCR postaux est associée à une unique catégorie de décision.

Sur la base de l'identification des différentes catégories ou types de décision correspondant respectivement aux différents résultats produits par les OCR postaux, on génère dans le bloc 2 des fonctions de croyance correspondantes dont les valeurs sont récupérées dans des matrices de confusion associées aux OCR postaux. La construction de ces matrices de confusion est décrite plus loin.

Ces fonctions de croyance sont définies sur le cadre de discernement $\Omega$, constitué de l'ensemble des adresses présentes dans la base de données d'adresses postales constituant les adresses valides pour le traitement OCR, de l'ensemble des adresses partiellement invalides et d'un élément représentatif des adresses totalement invalides, noté « inv ». Les adresses invalides peuvent être, par exemple, des enveloppes blanches, des adresses trop tronquées, des adresses qui n'existent pas dans la base de données, le verso d'un envoi postal sur lequel aucune adresse n'est indiquée... Les adresses partiellement invalides correspondent au cas dans lequel l'adresse complète n'est pas reconnue, par exemple la ville est correctement identifiable dans la base de données et donc valide mais la rue est invalide, elle est par exemple illisible ou absente. Par la suite, la partie invalide sera notée « inv ». Selon la hiérarchie illustrée figure 1, une invalidité au niveau de décision «acheminement », c'est-à-dire sur la ville, entraîne une invalidité totale de l'adresse. On comprend que la connaissance de l'information correspondant au niveau de décision «distribution» n'a pas d'intérêt pour la distribution postale si on ne connaît pas l'information de niveau «acheminent».

Pour le résultat de l'OCR LAP1, on génère ainsi la fonction de croyance m1 dont les valeurs sont récupérées dans la matrice de confusion MCLAP1. De la même façon, on génère pour les résultats produits par les OCR LAP2 et LAP3 les fonctions de croyance m2 et m3 à partir des matrices de confusion MCLAP2 et MCLAP3.

Dans le bloc 2, à partir de l'identification du type de décision correspondant au code « 60200 ? », c'est-à-dire le type de décision « Ville Distribuable », on récupère dans la matrice de confusion MCLAP1 des valeurs de performance de l'OCR LAP1 pour ce même type de décision. A partir des valeurs de la matrice de confusion MCLAP1, on génère ainsi une fonction de croyance m1 ayant par exemple les valeurs suivantes :

$$m1(60200) = 0.95$$
$$m1(60200inv) = 0.04$$
$$m1(\Omega) = 0.01$$

ce qui peut être exprimé de la façon suivante :

- la part de croyance dans le fait que la vérité se trouve dans cette ville est de 95% - m1(60200) = 0.95 ;
- la part de croyance dans le fait que la vérité se trouve dans cette ville et que la rue est invalide est de 4% - m1(60200inv) = 0.04 ; dans le cas « 60200inv », l'adresse complète n'est pas reconnue, c'est une adresse invalide partielle. Par exemple, 60200 Compiègne est inscrit sur l'envoi postal, toutefois, la partie distribution est illisible ou absente, dans ce cas le système décide 60200 et la partie distribution est invalide, ce qui est noté « 60200 inv ».
- la part de croyance dans le fait que la vérité se trouve dans une ville quelconque est de 1% - m1(Ω) = 0.01.

Le code d'indexation « 60201 » est du type de décision « Ville Non Distribuable » et la fonction de croyance générée à partir de la matrice de confusion MCLAP2 a par exemple les valeurs suivantes :

$$m2(60201) = 0.90$$
$$m2(\Omega) = 0.1$$

ce qui peut être exprimé de la façon suivante :

- la part de croyance dans le fait que la vérité se trouve dans cette ville est de 90 % - m2(60201) = 0,90 ;
- la part de croyance dans le fait que la vérité se trouve dans une ville quelconque est de 10% - m2(Ω)= 0,1.

Le code d'indexation « 60200 B1V17 » est du type de décision « Pas de Porte» et la fonction de croyance générée à partir de la matrice de confusion MCLAP3 a par exemple les valeurs suivantes :

$$m3(60200B1V17) = 0.88$$
$$m3(60200 \ B1Vinv) = 0$$
$$m3(60200 \ B1V) = 0.07$$
$$m3(60200) = 0.03$$
$$m3(60200inv) = 0.0$$
$$m3(\Omega) = 0.02$$

ce qui peut être exprimé de la façon suivante :

- la part de croyance dans le fait que la vérité se trouve dans ce pas de porte de cette rue de cette ville est de 88% - m3(60200 B1V17) = 0.88 ;
- la part de croyance dans le fait que la vérité se trouve dans cette rue de cette ville avec un numéro de pas de porte invalide est de 0% - m3(60200 B1Vinv) = 0 ; dans le cas « 60200 B1Vinv », l'adresse complète n'est pas reconnue, c'est une adresse invalide partielle. Par exemple, « rue Solférino 60200 Compiègne » est inscrit sur l'envoi postal, dans ce cas, le système décide 60200 B1V et le numéro de voie est invalide, ce qui est noté « 60200 B1V inv ».
- la part de croyance dans le fait que la vérité se trouve dans cette rue de cette rue de cette ville est de 7% - m3(60200 B1V) = 0.07 ;
- la part de croyance dans le fait que la vérité se trouve dans cette ville est de 3% - m3(60200 B1V) = 0.03 ;
- la part de croyance dans le fait que la vérité se trouve dans cette ville mais avec une rue invalide est de 0% - m3(60200 inv) = 0 ;
- la part de croyance dans le fait que la vérité se trouve dans une ville quelconque est de 2% - m3(Ω) = 0.02.

Combinaison des fonctions de croyance

Selon l'invention, on combine dans le bloc 3 les fonctions de croyance m1, m2, m3 générées dans le bloc 2 pour générer une fonction de croyance résultante indiquée par m en sortie du bloc 3.
Cette combinaison est par exemple une combinaison conjonctive non normalisée de Dempster-Shafer définie par la relation suivante :

$$m = m_1 \cap m_2 \cap m_3$$

La combinaison conjonctive présente l'avantage de reporter le produit des masses sur l'intersection des éléments focaux.

L'opérateur de la combinaison étant commutatif et associatif, les OCR postaux peuvent être combinés dans n'importe quel ordre, garantissant de ce fait le comportement déterministe de la combinaison. Avantageusement, avec une telle combinaison, l'ajout d'un nouveau lecteur d'adresses postales est aisé.

En pratique, on combine d'abord les fonctions de croyance m1 et m2 pour obtenir une première fonction de croyance résultante laquelle est ensuite combinée avec m3 pour obtenir la fonction de croyance résultante m.

Plus particulièrement, dans le bloc 3, on obtient les valeurs de calcul suivantes pour la combinaison conjonctive des fonctions de croyance m1 et m2, notée $m_{1 \cap 2}$ :

$$m_{1 \cap 2}(60200) = m1(60200) * m2(\Omega) = 0.95 * 0.1 = 0.095$$

$$m_{1 \cap 2}(60200inv) = m1(60200inv) * m2(\Omega) = 0.04 * 0.1 = 0.004$$

$$m_{1 \cap 2}(60201) = m1(\Omega) * m2(60201) = 0.01 * 0.9 = 0.009$$

$$m_{1 \cap 2}(\Omega) = m1(\Omega) * m2(\Omega) = 0.01 * 0.1 = 0.001$$

$$m_{1 \cap 2}(\emptyset) = m1(60200) * m2(60201) + m1(60200inv) * m2(60201)$$
$$= 0,95 * 0.9 + 0.04 * 0.9 = 0.891$$

où $\emptyset$ désigne l'ensemble vide et $m_{1 \cap 2}(\emptyset)$ désigne la masse sur l'ensemble vide représentative du "degré de conflit" entre les OCR postaux LAP1 et LAP2. Le conflit entre les OCR postaux est également pris en compte pour augmenter encore la fiabilité du résultat global.

On obtient les valeurs de calcul suivantes pour la combinaison conjonctive des fonctions de croyance m1, m2 et m3, notée $m_{1 \cap 2 \cap 3}$ :

$$m_{1 \cap 2 \cap 3}(60200\ B1V17) = 0.0845$$

$$m_{1 \cap 2 \cap 3}(60200\ B1Vinv) = 0$$

$$m_{1 \cap 2 \cap 3}(60200\ B1V) = 0.0067$$

$$m_{1 \cap 2 \cap 3}(60200) = 0.0048$$

$$m_{1 \cap 2 \cap 3}(60200inv) = 0.0002$$

$$m_{1 \cap 2 \cap 3}(60201) = 0.0002$$

$$m_{1 \cap 2 \cap 3}(\Omega) = 0$$

$$m_{1 \cap 2 \cap 3}(\varnothing) = 0.9036$$

soit donc :

| | |
|---|---|
| m(60200 B1V17) | = 0.0845 |
| m(60200 B1V) | = 0.0067 |
| m(60200) | = 0.0048 |
| m(60200 inv) | = 0.0002 |
| m(60201) | = 0.0002 |
| m($\Omega$) | = 0 |
| m($\varnothing$) | = 0.9036 |

La combinaison de fonctions de croyance issues de différentes sources conduit au renforcement de la fiabilité du résultat global. Chacun des OCR postaux LAP1, LAP2 et LAP3 étant indépendant, le résultat global issu de la combinaison prend en compte la redondance d'informations. Comme expliqué ci-dessus, la combinaison conjonctive $m_{1 \cap 2 \cap 3}(\varnothing)$ est représentative du "degré de conflit" entre les OCR postaux LAP1, LAP2 et LAP3 pour augmenter encore la fiabilité du résultat global.

Décision du résultat global

Dans le bloc 4, à partir de la fonction de croyance résultante m, on décide un résultat global d'adresse. Ce résultat global de fusion est représenté par le code d'indexation « 60200B1V ?» à droite sur la figure 2. On notera que dans cet exemple, le code d'indexation résultant de la fusion est en fait différent des codes d'indexation produits en sortie des OCR postaux.
Notons $D_{ache}$ (respectivement, $D_{rue}$, $D_{distri}$), l'ensemble des décisions de niveau acheminement (i.e. par exemple « ville ») (respectivement, de niveau « rue », de niveau « distribution »).
L'ensemble des actions A pouvant être effectuées par un OCR postal est défini par :

$$A = \{\text{Décision de niveau rejet complet i.e. } \Omega\} \cup D_{ache} \cup D_{rue} \cup D_{distri} \, ,$$

où "décider que la vérité est dans un ensemble A" est identifié à "A", par exemple décider "60200" signifie décider la vérité est dans 60200, et décider "$\Omega$" signifie rejeter complètement.
Selon la méthode de l'invention les adresses invalides sont identifiées à des rejets. Par exemple, si la vérité se trouve être une adresse invalide totalement, le système effectue un rejet complet i.e. décide $\Omega$, et si la vérité est "60200inv", le système décide "60200 rejet distribution" i.e. "60200 ?".
Dans l'exemple de la figure 2, les actions que le système peut décider sont : A1 = " ? " (i.e. $\Omega$, i.e. rejet complet), A2 = "60201", A3 = "60200 ?", A4 = "60200 B1V ?", et A5 = "60200 B1V17". En particulier, ces actions incluent les résultats produits par les OCR postaux, dans l'exemple ce sont les actions A2, A3 et A5, auxquelles le système ajoute le rejet complet A1 qui peut dans tous les cas être décidé. Par ailleurs, le système ajoute aux actions décidables, les actions associées aux résultats produits par les OCR postaux et correspondant aux niveaux de décision supérieurs dans la hiérarchie de distribution postale définie en référence à la figure 1. Par exemple, pour le résultat "60200 B1V17", produit par l'OCR postal LAP3, le système génère l'action associée A4 = "60200 B1V ?". On comprend que le système peut générer l'action associée "60200 ?", mais celle-ci est de toute façon prise en compte puisque c'est le résultat produit par l'OCR postal LAP1. De même, le résultat associé aux résultats produits par les OCR postaux LAP1 et LAP2 est le rejet complet qui peut dans tous les cas être décidé.
Avantageusement, avec la méthode selon l'invention, le système peut donc décider une action dont le résultat n'a pas été produit par un des OCR postaux. Les actions A1 et A4 sont des actions possibles, notamment en cas d'erreur du lecteur d'adresses ou même en cas d'erreur d'adresse sur l'envoi postal.
Par ailleurs, du fait de la grande cardinalité de la base de données d'adresses valides et de sa complexité, le système exploite un partitionnement ou grossissement de Ω, noté Γ, calculé à partir des éléments focaux des fonctions de croyances issues des OCR postaux. En effet il n'est pas possible de connaître précisément la cardinalité de chaque sous-ensemble de Ω en un temps raisonnable, ce qui empêcherait le calcul précis de la probabilité pignistique attachée au risque calculé de chaque action. Avec la méthode selon l'invention, la probabilité pignistique est calculée sur le partionnement Γ de Ω. Γ constitue un « cadre de pari » (« betting frame »), puisque le système prend une décision en faveur d'un élément de Γ.

Pour construire Γ, on part d'un élément construit à partir de Ω auquel on enlève tous les éléments focaux étant contenus dans Ω et dans nul autre élément focal (Celui-ci constitue un premier singleton de Γ). Puis on réitère l'opération à partir des éléments focaux enlevés auxquels on enlève les éléments focaux dont ils sont les plus petits contenants. Lorsque plus aucun élément focal ne peut être enlevé, l'opération est finie, la partition est créée.

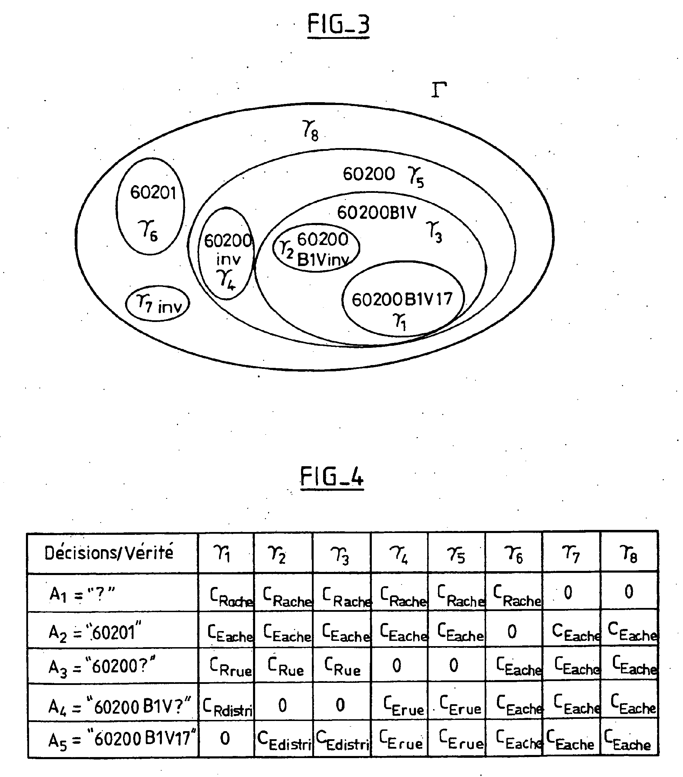

Le cadre de pari Γ de Ω associé à l'envoi postal 1, est illustré sur la figure 3. Il est composé des éléments :

$\gamma_1$ = {60200 B1V 17},
$\gamma_2$ = {60200 B1V inv},
$\gamma_3$ = 60200 B1V \ {60200 B1V 17, 60200 B1V inv},
$\gamma_4$ = {60200 inv},
$\gamma_5$ = 60200 \ {60200 B1V, 60200 inv},
$\gamma_6$ = {60201 },
$\gamma_7$ = {inv},
$\gamma_8$ = Ω \{60200, 60201, 60200inv}.

Dans le bloc 4, à partir du cadre de pari Γ, le système calcule la fonction de risque qui associe à chaque action A1 à A5 une valeur de risque selon la formule $\rho(\alpha)$ décrite précédemment. En particulier, la valeur du risque $\rho$ est calculée par transformation pignistique de la fonction de croyance résultante m pondérée par des coûts de décisions.

Les coûts de décision peuvent se regrouper en coûts de rejet et coûts d'erreur de niveau acheminement, rue et distribution selon la hiérarchie de distribution postale.

- Un coût de rejet correspond au prix à payer lorsque le système décide une action juste mais partielle. Le coût de rejet acheminement, noté CRache, correspond au cas où le système décide une action de niveau rejet complet dans la hiérarchie de distribution postale, c'est-à-dire que le système n'a pas pu décider l'information de niveau acheminement par exemple le code d'indexation produit est "?".
- Le coût de rejet rue, noté CRrue, correspond au cas où le système décide une action de niveau acheminement dans la hiérarchie, c'est-à-dire que le système n'a pas pu décider l'information de niveau rue, par exemple le code d'indexation produit est "60200?".
- Le coût de rejet distribution, noté CRdistri, correspond au cas où le système décide une action de niveau rue dans la hiérarchie, c'est-à-dire que le système n'a pas pu décider l'information de niveau distribution, par exemple le code d'indexation produit est "60200 B1V ?".
- Le coût d'erreur de niveau acheminement, noté CEache, correspond au prix à payer pour avoir commis une erreur au niveau de l'acheminement, par exemple lorsque le système décide "60200" alors que l'adresse sur l'envoi est "60201 ".
- Le coût d'erreur de niveau rue, noté CErue, correspond au prix à payer pour avoir commis une erreur au niveau de la rue, par exemple lorsque le système décide "60200B1V" alors que l'adresse sur l'envoi est "60201 B1W".
- Le coût d'erreur de niveau distribution, noté CEdistri, correspond au prix à payer pour avoir commis une erreur au niveau de la distribution, par exemple lorsque le système a décidé "60200 B1V17" alors que l'adresse sur l'envoi est "60201 B1V18".

De préférence, les valeurs de coûts sont ordonnées selon la hiérarchie des niveaux de décision avec les coûts d'erreur qui sont plus importants que les coûts de rejet. Ainsi, on a :

$$0 \leq \text{CRditri} \leq \text{CRrue} \leq \text{CRache} \leq \text{CEdistri} \leq \text{CErue} \leq \text{CEache}$$

Dans le traitement postal : faire une erreur sur la ville est plus grave que de faire une erreur sur la rue, faire une erreur sur la rue est plus grave que de faire une erreur sur la distribution, faire une erreur sur la distribution est plus grave que de faire un rejet sur la ville, et faire un rejet sur la ville est plus grave que de faire un rejet de la rue, lui-même plus grave que de faire un rejet sur la distribution. En effet, un envoi postal acheminé par erreur à une mauvaise destination est plus coûteux à traiter qu'un envoi postal en rejet qui est traité par un opérateur de vidéo codage.

Les coûts servent à paramétrer la décision du résultat global de manière souple. Ils définissent ainsi les marges du taux de lecture et du taux d'erreur.

Les coûts associés à l'exemple de la figure 2 sont illustrés dans le tableau de la figure 4 qui illustre la répartition des coûts d'erreur et des coûts de rejet en fonction d'une décision et de la vérité.

Selon l'invention, dans le bloc 4 le système calcule la probabilité pignistique en exploitant la fonction de croyance résultante m selon les relations suivantes :

$$BetP\ (\{\gamma_1\})\ =\ K(m(\Omega)/8\ +\ m(60200)/5\ +\ m(60200B1V)/3\ +\ m(\{60200B1V\ 17\}))= 0.910$$

$$BetP\ (\{\gamma_2\})\ =\ K(m(\Omega)/8\ +\ m(60200)/5\ +\ m(60200B1V)/3\ +\ m(\{60200B1V\ inv\})) = 0.033$$

$$BetP\ (\{\gamma_3\}) = K(m(\Omega)/8 + m(60200)/5 + m(60200B1V\ )/3) = 0.033$$

$$BetP\ (\{\gamma_4\}) = K(m(\Omega)/8 + m(60200)/5 + m(\{60200inv\})) = 0.012$$

$$BetP\ (\{\gamma_5\}) = K(m(\Omega)/8 + m(60200)/5) = 0.010$$

$$BetP\ (\{\gamma_6\}) = K(m(\Omega)/8 + m(\{60201\})) = 0.002$$

$$BetP\ (\{\gamma_7\}) = K(m(\Omega)/8 + m(\{inv\})) = 0.000$$

$$BetP\ (\{8\}) = K(m(\Omega)/8) = 0.000$$

$$avec\ K = 1\ /\ (\ 1 - m(\varnothing)).$$

Puis dans le bloc 4, on calcule les risques des décisions à partir de des probabilités pignistiques et des valeurs de coût d'erreur et de rejet du tableau illustré figure 4, selon les relations suivantes :

$$\rho(A1)\ \ = \Sigma_{\ i \in I \setminus \{7,8\}}\ CRache\ BetP\ (\{\gamma_i\}) = CRache$$

$$\rho(A2)\ \ = \Sigma_{\ i \in I \setminus \{6\}}\ CEache\ BetP\ (\{\gamma_i\}) = 0.998\ Ceache$$

$$\rho(A3)\ \ = \Sigma_{\ i \in \{1,2,3\}}\ CRrue\ BetP\ (\{\gamma_i\}) + \Sigma_{\ i \in \{6,7,8\}}\ CEache\ BetP\ (\{\gamma_i\})$$
$$= 0.976\ CRrue + 0.002\ Ceache$$

$$\rho(A4) = \text{CRdistri BetP}(\{\gamma 1\}) + \Sigma_{i \in \{4,5\}} \text{CErue BetP}(\{\gamma i\}) + \Sigma_{i \in \{6,7,8\}} \text{CEache BetP}(\{\gamma i\}) = 0.910 \text{ CRdistri} + 0.022 \text{ CErue} + 0.002 \text{ CEache}$$

$$\rho(A5) = \Sigma_{i \in \{2,3\}} \text{CEdistri BetP}(\{\gamma i\}) + \Sigma_{i \in \{4,5\}} \text{CErue BetP}(\{\gamma i\}) + \Sigma_{i \in \{6,7,8\}} \text{CEache BetP}(\{\gamma i\})$$
$$= 0.066 \text{ CEdistri} + 0.022 \text{ CErue} + 0.002 \text{ CEache}$$

Si par exemple, les valeurs représentatives des coûts de distribution postale sous la forme du 6-uplet (CRdistri, CRrue, CRache, CEdistri, CErue, CEache) sont égales à (1, 2, 3, 20, 25, 50), le résultat global décidé par le système correspondant à la valeur la plus petite de la fonction coût est A4 i.e. " 60200 B1V ?". Sur la figure 2 on a représenté le résultat global pour ce 6-uplet. Avantageusement, avec la méthode selon l'invention, le résultat global peut être un code d'indexation qui n'a pas été produit par l'un des OCR postaux.

Alternativement, si le 6-uplet est égal à (1, 2, 3, 4, 5, 6), le résultat global de fusion en sortie du bloc 4 est A5 i.e. " 60200 B1V 17".

Si le 6-uplet est égal à (1, 2, 3, 40, 50, 60), le résultat global est A3 i.e. " 60200 ?".

Si le 6-uplet est égal à (1, 2, 3, 400, 500, 600), le résultat global est A1 i.e. " ? ".

Sur la base de cet exemple, on peut constater qu'il est moins grave de commettre une erreur sur la partie distribution que sur la ville, et mieux vaut rejeter la ville plutôt que de faire une erreur sur cette ville. Bien sûr, les valeurs de coûts sont normalement fixées par l'Opérateur postal en fonction de l'application postale. Par exemple, on peut concevoir que pour une certaine application, on préfère donner un coût plus élevé au rejet de la ville qu'à une erreur distribution, parce que même si le point distribution est faux, le lieu d'acheminement est correct et cette erreur coûte moins cher que le travail demandé par un rejet global.

Alternativement les coûts de rejet et d'erreur peuvent être imposés par le client de sorte à obtenir les taux de lecture et d'erreur désirés.

Construction d'une matrice de confusion

Comme indiqué plus haut, le résultat produit par un OCR postal dans un système multi-OCR parallèles selon l'invention est modélisé par une fonction de croyance qui est générée à partir d'une matrice de confusion. La construction d'une matrice de confusion est effectuée hors ligne, c'est-à-dire en dehors du fonctionnement pour le tri des envois postaux.

Une matrice de confusion selon l'invention est associée à un unique OCR postal et comprend des taux de fiabilité (valeurs des fonctions de croyance) regroupés dans une table dans laquelle les lignes correspondent respectivement aux différentes catégories de décision des résultats produits par l'OCR postal (comme décrit plus haut). Les colonnes de cette table correspondent aux différents niveaux de décision de la hiérarchie de distribution postale, chaque niveau étant divisé selon que la partie du code d'indexation correspondant au niveau est invalide, c'est-à-dire qu'elle n'existe pas dans la base de données d'adresses valides, ou en erreur, c'est-à-dire que la partie du code d'indexation est différente de l'adresse dans l'image, ou la partie du code d'indexation correspondant au niveau est juste, et dans ce cas le niveau de décision inférieur dans la hiérarchie est lui-même subdivisé de façon identique comme indiqué ci-dessus. Le processus est ainsi répété jusqu'au niveau de décision le plus bas de la hiérarchie, chaque division de niveau constituant une colonne de la table.

On affecte une masse ou un taux de fiabilité aux différents éléments focaux des fonctions de croyance associées aux catégories de décisions selon la hiérarchie de la figure 1 à partir d'un apprentissage de l'OCR postal sur un lot d'échantillons d'images d'envois postaux.

Par exemple, si on a comptabilisé 300 échantillons d'images d'envois postaux sur le lot pour lesquels l'OCR a produit des résultats de la catégorie de décision « Pas de Porte », et que sur ces 300 échantillons :

- on a comptabilisé 4 fois que le résultat de l'OCR était erroné sur la ville. Par exemple l'adresse décodée est « 60200 Compiègne - Rue de Solférino » et l'adresse dans l'image est « 76600 Le Havre - Rue de Solférino » ;
- on a comptabilisé 2 fois que le résultat de l'OCR était invalide sur la ville. Par exemple, l'adresse décodée est « 60200 Compiègne - Rue de Solférino » et l'adresse sur l'image est « 60200 Paris- Rue de Solférino», alors que « 60200 Paris» n'existe pas dans la base de données d'adresses valides. On comprend que la méthode selon l'invention modélise les cas dans lesquels l'émetteur de l'envoi postal se trompe en écrivant l'adresse sur l'envoi ;

- on a comptabilisé 6 fois que le résultat de l'OCR était juste sur la ville mais erroné sur la rue. Par exemple l'adresse décodée est « 60200 Compiègne - Rue de Solférino» et l'adresse dans l'image est « 60200 Compiègne - Boulevard de Solférino» ;

- on a comptabilisé 3 fois que le résultat de l'OCR était juste sur la ville mais invalide sur la rue. Par exemple l'adresse décodée est « 60200 Compiègne - Rue de Solférino » et l'adresse dans l'image est « 60200 Compiègne - Rue de Solemio » alors que « Rue de Solemio » est une rue inexistante dans Compiègne selon la base de données d'adresses valides;

- on a comptabilisé 21 fois que le résultat de l'OCR était juste sur la ville et sur la rue mais erronée sur le pas de porte. Par exemple, l'adresse décodée est « 60200 Compiègne - Rue de Solférino - 17» et l'adresse dans l'image est « 60200 Compiègne - Rue de Solférino - 18» ;

- on a comptabilisé 20 fois que le résultat de l'OCR était juste sur la ville et sur la rue mais invalide sur le pas de porte. Par exemple, l'adresse décodée est « 60200 Compiègne - Rue de Solférino - 17» et l'adresse dans l'image est « 60200 Compiègne - Rue de Solférino - 200 » alors que le pas de porte « 200 » n'existe pas dans la « Rue de Solférino » de la ville de « Compiègne »;

- on a comptabilisé 244 fois que le résultat de l'OCR était juste sur la ville, la rue et sur le pas de porte. Par exemple, l'adresse décodée est « 60200 Compiègne - Rue de Solférino - 17» et l'adresse dans l'image est « 60200 Compiègne - Rue de Solférino - 17» ;

pour un résultat de la catégorie « Pas de Porte », par exemple, le code d'indexation « 60200 B1V17», on a les affectations suivantes :

$$m(\Omega) = 4/300 = 1.4\%$$

$$m(\text{« inv »}) = 2/300 = 0{,}6\%$$

$$m(\text{« 60200 ? »}) = 6/300 = 2\ \%$$

$$m(\text{« 60200 inv »}) = 3/300 = 1\ \%$$

$$m(\text{« 60200 B1V ? »}) = 21/300 = 7\%$$

$$m(\text{« 60200 B1V inv »}) = 20/300 = 6.6\ \%$$

$$m(\text{« 60200 B1V17 »}) = 244/300 = 81.4\ \%$$

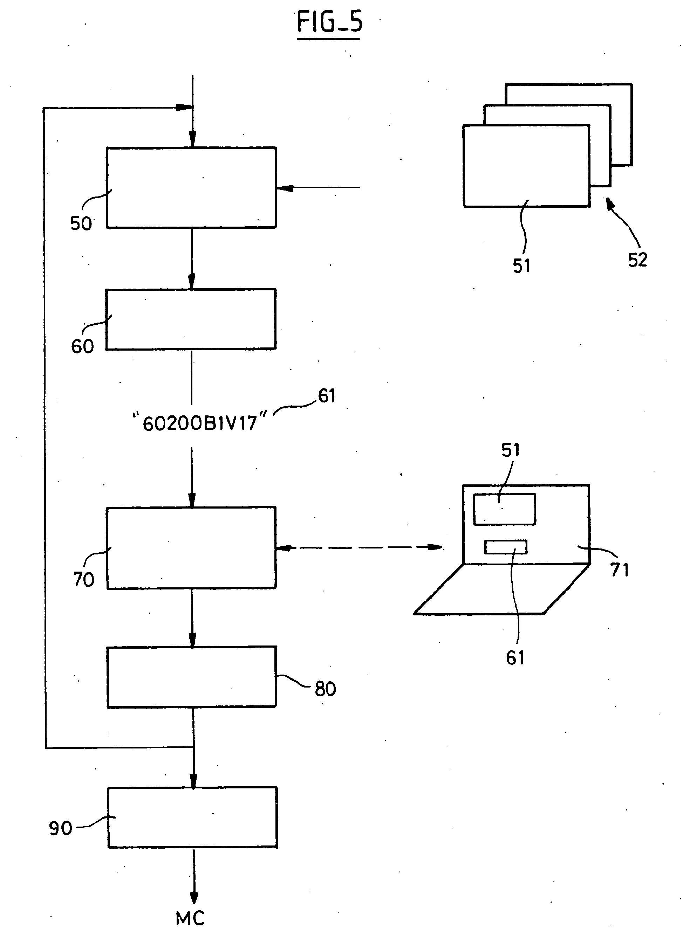

Un exemple de mise en oeuvre d'une méthode de construction d'une matrice de confusion selon l'invention est illustré schématiquement sur la figure 5.

Dans l'étape 50, on prélève une image 51 dans un lot 52 d'échantillons d'images d'envois postaux, qui sont enregistrés en mémoire dans une unité de traitement de données (non représentée). Un lot d'échantillons d'images d'envois postaux peut comprendre en pratique environ 50000 images. Le prélèvement peut se faire de façon aléatoire dans le lot d'échantillons.

L'image courante 51 prélevée dans l'étape 50 est soumise à l'OCR postal sous apprentissage en 60 qui produit avec sa base de données d'adresses valides (non représentée sur la figure 5) un résultat d'adresse postale sous la forme d'un code d'indexation 61 qui peut être un code d'indexation complet ou partiel, par exemple le code d'indexation complet « 60200 B1V17 ».

Dans l'étape 70, l'image courante 51 ainsi que le résultat produit par l'OCR postal sont envoyés sur un écran d'affichage 71.

Un Opérateur sur la base de la lecture à l'écran de l'adresse dans l'image et du résultat de décodage, peut relever le degré de conformité entre le résultat de décodage et l'adresse dans l'image affichée à l'écran, c'est à dire comptabiliser pour ce résultat de décodage une lecture juste, ou une erreur ou un résultat invalide à un certain niveau de décision de la hiérarchie postale comme illustré plus haut. Ce relevé de conformité est enregistré à l'étape 80 en mémoire en correspondance avec le code d'indexation produit par l'OCR et le processus revient à l'étape 50 pour un prélèvement d'un nouvel échantillon d'image d'envoi postal.

Quand un nombre suffisant d'échantillons d'images d'envois postaux ont été ainsi traités dans les étapes 50 à 80 pour chaque catégorie de décision de l'OCR postal et chaque niveau de décision divisé comme expliqué ci-dessus, le processus se poursuit à l'étape 90 où les codes d'indexation sont catégorisés pour regrouper et cumuler les relevés suite à quoi les valeurs des fonctions de croyance associées aux différentes catégories de décision sont calculées pour constituer une matrice de confusion.

Bien entendu, on peut imaginer une méthode de construction d'une matrice de confusion selon l'invention dans laquelle les échantillons d'images sont étiquetés et donc dans laquelle il n'est plus nécessaire de provoquer un affichage des images sur l'écran 71 pour un relevé manuel par un Opérateur.

Dans le cadre du tri postal, il n'est pas envisageable de réaliser un apprentissage sur toutes les adresses postales que peut produire un OCR postal de sorte que l'Homme du métier saura apprécier que les lignes d'une matrice de confusion telle que MC correspondent en fait à un ensemble de classes dans un cadre de discernement.

L'Homme du métier saura également apprécier que dans la matrice de confusion telle que MC, les taux de fiabilité peuvent se décomposer en taux de lecture, taux d'erreur et taux de rejet en correspondance avec les niveaux de décision d'une hiérarchie postale comme celle illustrée sur la figure 1.

Selon l'invention, les catégories de décision peuvent être étendues à des critères allant au-delà de la structure ou du contenu du code d'indexation produit par un OCR postal. Par exemple, la catégorisation peut être étendue à des caractéristiques supplémentaires dérivées de l'image de l'envoi postal : écriture dactylographiée ou manuscrite, position/ orientation du bloc d'adresse, type d'enveloppe, etc....

Dans ce cas, l'apprentissage de l'OCR postal devra également être étendu avec des échantillons d'images d'envois représentatifs desdites caractéristiques supplémentaires.

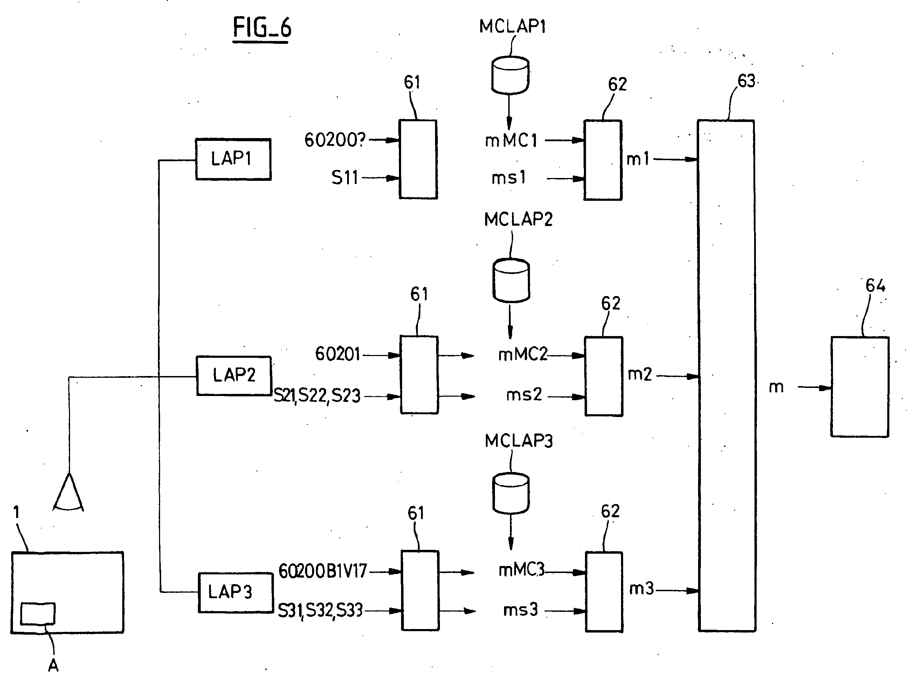

Sur la figure 6, on a représenté les étapes d'un mode de réalisation particulier de l'invention dans lequel les OCR postaux fournissent des scores de fiabilité associés aux décisions. Un score de fiabilité est représentatif de la confiance attribuée par un OCR postal à la décision à laquelle il est associé. Par exemple, les scores prennent des valeurs comprises entre 0 et 1000, 1000 étant la plus grande valeur de confiance. Il est entendu que chaque OCR postal peut avoir un nombre de scores différent.

Une image de la face d'un envoi postal 1 comportant une information d'adresse A est soumise à trois OCR postaux LAP1, LAP2 et LAP3.

Dans l'exemple de la figure 6, l'OCR postal LAP1 produit le code d'indexation partiel « 60200 ? » ainsi que le score associé s11 relatif à la confiance en la reconnaissance de « 60200 Compiègne ».

L'OCR postal LAP2 produit le code d'indexation « 60201 » ainsi que les scores s21 relatif à la confiance en la reconnaissance de « 60200 », s22 relatif à la confiance en la reconnaissance de « Compiègne » et s23 relatif à la confiance en le fait que la distribution est invalide.

L'OCR postal LAP3 produit le code d'indexation « 60200 B1V17 » ainsi que les scores s31 relatif à la confiance en la reconnaissance de « 60200 Compiègne », s32 relatif à la confiance en la reconnaissance de « Rue solférino dans 60200 Compiègne » et s33 relatif à la confiance en la reconnaissance de « 17 Rue solférino dans 60200 Compiègne ».

Selon ce mode de réalisation particulier de l'invention, dans le bloc 61, on génère les masses $m_{MC1}$, $m_{MC2}$ et $m_{MC3}$ issues respectivement des matrices de confusion MCLAP1, MCLAP2 et MCLAP3 construites tel que décrit précédemment. Dans le bloc 61, on génère également les masses $m_{S1}$, $m_{S2}$ et $m_{S3}$ issues des scores respectivement fournis par les OCR postaux LAP1, LAP2 et LAP3.

Pour construire $m_{S1}$, $m_{S2}$ et $m_{S3}$ on initialise $m_{S1}$, $m_{S2}$ et $m_{S3}$ à partir de la sémantique des scores définie selon chaque OCR postal. En particulier, les scores peuvent être associés à la partie acheminement, à la partie distribution ou à l'ensemble du code d'indexation produit par l'OCR.

Ainsi $m_{S1}$ prend les valeurs suivantes :

$$m_s(60200\ ?) = s11\ /\ 1000$$

$$m_s(\Omega) = 1 - s11\ /\ 1000$$

où, on divise par 1000 pour avoir des masses définies dans [0, 1] dont la somme est égale à 1.

Ainsi $m_{S2}$ prend les valeurs suivantes :

$$m_s(60200\ ?) = (s21 + s22) / 3000$$

$$m_s(60200\ inv) = s23 / 3000$$

$$m_s(\Omega) = 1 - (s21+s22+s23) / 3000$$

où, on divise par 3000 pour avoir des masses définies dans [0, 1] dont la somme est égale à 1.

Ainsi $m_{S3}$ prend les valeurs suivantes :

$$m_s(60200\ ?) = s31 / 3000$$

$$m_s(60200\ B1V?\ ) = s32 / 3000$$

$$m_s(60200\ B1V17\ ) = s33 / 3000$$

$$m_s(\Omega) = 1 - (s31+s32+s33) / 3000$$

où, on divise par 3000 pour avoir des masses définies dans [0, 1] dont la somme est égale à 1.

Dans le bloc 62 de la figure 6, selon ce mode de réalisation particulier de l'invention, on combine $m_{MC1}$ avec $m_{S1}$ pour obtenir m1 la fonction de croyance de l'OCR postal LAP1. De la même manière, on génère m2 et m3 les fonctions de croyance des OCR postaux LAP2 et LAP3 résultant respectivement des combinaisons de $m_{MC2}$ avec $m_{S2}$ et de $m_{MC3}$ avec $m_{S3}$.

Dans le bloc 63 de la figure 6, on combine des fonctions de croyance m1, m2 et m3 des OCR postaux LAP1, LAP2 et LAP3 de la même manière que précédemment décrit en référence à la figure 2.

Dans le bloc 64 de la figure 6, on décide un résultat global d'adresse de la même manière que précédemment décrit en référence à la figure 2.

Alternativement, dans ce mode de réalisation particulier de l'invention la fonction de croyance d'un OCR postal peut être obtenue à partir d'un apprentissage d'un affaiblissement optimal de $m_{MC}$ qui est fonction des scores.

L'affaiblissement d'une masse $m_{MC}$ par un coefficient $\alpha$ est défini par:

$$\forall A \subseteq \Omega\ ,\ A \neq \Omega,\ {}^{\alpha}m_{MC}\ (A) = (1-\alpha)\ m_{MC}\ (A),$$

et

$$et\ {}^{\alpha}m_{MC}\ (\Omega) = (1-\alpha)\ m_{MC}\ (\Omega) + \alpha$$

$^{\alpha}m_{MC}$ est la combinaison disjonctive de $m_{MC}$ avec $m_{si}$ définie par $m_{si}(\varnothing) = 1 - \alpha$ et $m_{si}(\Omega) = \alpha$, où si représente l'ensemble des scores fournis par l'OCR postal LAPi, pour tout $i \in \{1,2,3\}$ puisque dans notre exemple de réalisation, le système selon l'invention est composé de trois OCR postaux LAP1, LAP2, LAP3. Il est à noter qu'un ensemble si peut être nul dans le cas où l'OCR postal LAPi ne fournit pas de score, et que la cardinalité des ensembles si peut être différente d'un OCR postal à un autre.

Dans la méthode selon l'invention, on choisit $\alpha = f(si)$, soit :

$$m_{si}(\Omega) = f(si)\ et\ m_{si}(\varnothing) = 1 - f(si),$$

où f est une fonction décroissante des scores. Si les scores sont voisins de 0, ce qui signifie que l'OCR postal associe au résultat une confiance faible, alors selon la méthode, on affaiblit fortement $m_{MC}$, dans ce cas on choisit f(si)=1. Si les scores sont voisins de 1000, ce qui signifie que l'OCR postal associe au résultat une confiance forte, alors selon la méthode, on n'affaiblit pas $m_{MC}$, dans ce cas on choisit f(si)=0.

Par exemple, on peut prendre une fonction décroissante des scores définie de la manière suivante : f(si) = exp (-[$c_0$ + Σ ci si]), où les ci sont des constantes, et $c_0$ est la valeur correspondant au cas dans lequel l'OCR postal ne fournit pas de score. La valeur de $c_0$ est obtenue par apprentissage de la fonction f(si) correspondante.

L'apprentissage des fonctions f(si) est réalisé à partir d'échantillons d'images étiquetées. Selon la méthode, on cherche les constantes ci des fonctions f(si) qui minimisent l'erreur entre une décision basée sur la probabilité pignistique et la vérité des images étiquetées. Par conséquent, on cherche les constantes ci des fonctions f(si) qui minimisent la fonction :

$$\sum_{i \in I} \quad \sum_{j \in J(i)} \quad (BetP\{o_i\}(\gamma_j) - \delta_{ij})^2$$

où $O_i$ désigne une image parmi les échantillons, I le nombre de ces images dans le lot d'apprentissage; $\gamma_j$ désigne un élément du partionnement $\Gamma$ de $\Omega$ associé à l'image en courante et J(i) le nombre d'élément du partionnement $\Gamma$ de $\Omega$ associé à l'image en courante; et $\delta_{ij}$ = 1 si $O_i$ est une image correspondant à un envoi postal devant être envoyé dans $\gamma_i$ , sinon $\delta_{ij}$ = 0.

La méthode selon l'invention peut être raffinée pour exploiter avec les fonctions de croyance les résultats filtrés par les OCR postaux. On entend par résultats filtrés, les codes d'indexation complets ou partiels qui suivent dans l'ordre décroissant de fiabilité le code d'indexation produit comme décision par l'OCR postal. Ces résultats filtrés peuvent être dans certains OCR postaux associés à des scores de fiabilité et on peut imaginer d'appliquer le principe de la méthode selon l'invention en générant des fonctions de croyance pour ces résultats filtrés, lesquelles seront combinées pour obtenir la fonction de croyance globale. Ces résultats filtrés peuvent contribuer à réduire les situations d'incohérence en présence de résultats d'adresse postale très différents entre les OCR postaux et il en résulte une augmentation de la fiabilité du système multi-OCR.

La méthode selon l'invention peut également être raffinée pour exploiter avec les fonctions de croyance les résultats dérivés produits par les OCR postaux. On entend par résultats dérivés, les résultats obtenus à partir des informations textuelles qui ont été reconnues par le traitement OCR sans pour autant avoir été décidées par l'OCR postal après extraction dans la base de données d'adresses valides. De même que pour les résultats filtrés, on peut appliquer le principe de la méthode selon l'invention en générant des fonctions de croyance pour ces résultats dérivés, lesquelles seront combinées pour obtenir la fonction de croyance globale.

L'Homme du métier saura apprécier que le réglage des coûts de distribution peut prendre en compte les différentes règles de codage (« coding rules » en anglais) imposées par les Postes.

On comprendra que les traitements de données dans les blocs 2 à 4 sur la figure 2 peuvent être réalisés au sein d'un même lecteur d'adresses postales ou de plusieurs lecteurs d'adresses postales.

Selon l'invention, on peut fournir une même image d'un envoi postal courant 1 à tous les OCR postaux en parallèle, cette image étant formée par une caméra dont la sortie est branchée en parallèle à l'entrée des OCR postaux. Le système de décodage comprend alors un seul lecteur d'adresses postales avec une caméra mais plusieurs OCR postaux.

En variante, on peut former plusieurs images d'un même envoi postal courant tel que 1 avec plusieurs caméras dont les sorties sont respectivement branchées sur les différents OCR postaux. Le système de décodage dans ce cas est un système à plusieurs lecteurs d'adresses postales avec chacun une caméra et un OCR postal.

Dans un système multi-OCR selon l'invention à un ou plusieurs lecteurs d'adresses postales, on conçoit facilement que l'intégration d'un OCR postal supplémentaire dans le système n'affecte que le traitement relatif à la combinaison des fonctions de croyance. Or cette combinaison de fonctions de croyance présentant la propriété d'être associative et commutative, en pratique l'ajout de cet OCR postal supplémentaire est simple de mise en oeuvre dans le traitement de données relatif à cette combinaison de fonctions de croyance. Il est évident qu'une matrice de confusion devra quand même être construite pour cet OCR postal supplémentaire préalablement à son intégration dans le système multi-OCR.

Avantageusement, avec la méthode selon l'invention, on peut concevoir un système multi-OCR dans lequel on fusionne seulement les résultats produits par certains des OCR postaux disponibles dans le système et si le résultat global d'adresse postale produit par le système est insuffisamment complet pour une distribution postale on exploite les autres OCR postaux pour produire d'autres résultats qui sont fusionnés. En particulier, on peut concevoir de fusionner les résultats de deux OCR postaux dans un premier temps avant de combiner tous les OCR postaux d'un système multi-OCR ce qui permet de diminuer le temps moyen de décodage des images d'envois postaux dans le système multi-OCR.

L'Homme du métier saura apprécier que la combinaison conjonctive utilisée dans l'exemple de mise en oeuvre de la méthode selon l'invention peut être remplacée par une combinaison de Dempster-Shafer, une combinaison disjonctive, une combinaison Dubois-Prade, une combinaison moyenne, la règle de combinaison « prudente » (« cautious rule of combination ») ou autre sans sortir du cadre de l'invention.

En particulier, la combinaison de Dempster-Shafer de deux masses m1 et m2 est définie de la façon suivante :

$$\forall A \subseteq \Omega,\ A \neq \varnothing,\ m_{12}(A) = K \sum_{B \cap C = A} m_1(B)\, m_2(C),\ \text{où } K = 1/(1 - \sum_{B \cap C = \varnothing} m_1(B)\, m_2(C)),$$

où K est le coefficient de normalisation.

La combinaison conjonctive de deux masses m1 et m2 est définie de la façon suivante :

$$\forall A \subseteq \Omega,\ m_{12}(A) = \sum_{B \cap C = A} m_1(B)\, m_2(C)$$

La combinaison disjonctive de deux masses m1 et m2 est définie de la façon suivante :

$$\forall A \subseteq \Omega,\ m_{12}(A) = \sum_{B \cup C = A} m_1(B)\, m_2(C)$$

La combinaison de Dubois-Prade de deux masses m1 et m2 est définie de la façon suivante :

$$\forall A \subseteq \Omega,\ m_{12}(A) = \sum_{B \cap C = A} m_1(B)\, m_2(C) + \sum_{\{B \cap C = \varnothing\ et\ B \cup C = A\}} m_1(B)\, m_2(C)$$

La combinaison moyenne de deux masses m1 et m2 est définie de la façon suivante :

$$\forall A \subseteq \Omega,\ m_{12}(A) = (m_1(A) + m_2(A))/2$$

L'Homme du métier saura apprécier que la transformation en probabilité pignistique utilisée dans l'exemple de mise en oeuvre de la méthode selon l'invention peut être remplacée par une transformation par des plausibilités (« plausibility transformation) au sens de Cobb-Shenoy dans «A comparison of method for transforming bielief fonction models to probability models » Symbolic and quantification approach with uncertainty, lecture notes in artificial intelligence 27112003 page 255-266.

**Revendications**

1. Une méthode pour décoder des adresses postales sur des images d'envois postaux (1) avec plusieurs traitements OCR postaux (LAP1, LAP2, LAP3) en parallèle, dans laquelle les résultats produits par les OCR qui comprennent des décisions complètes, des décisions partielles ou encore une décision de rejet complet, sont fusionnés pour décider un résultat global d'adresse postale, **caractérisée :**

en ce que lesdits résultats d'OCR sont fusionnés en considérant ces décisions d'OCR dans un cadre de discernement à plusieurs niveaux d'ensembles de classes d'un modèle hiérarchique de croyances transférables, **en ce que** on génère donc à partir des résultats des OCR des fonctions/masses de croyance (m1,m2,m3) à partir de matrices de confusion associées respectivement aux OCR, chaque matrice de confusion associée à un OCR étant obtenue par apprentissage avec l'OCR en considérant un modèle hiérarchique des décisions de l'OCR, correspondant à une hiérarchie de distribution postale, avec un niveau supérieur (niveau rejet complet) qui correspond à un rejet complet de l'OCR, un niveau inférieur (niveau distribution) qui correspond à une décision complète de l'OCR et des niveaux intermédiaires (niveau acheminement - niveau rue) qui correspondent à des décisions partielles de l'OCR, et des catégories de décisions de l'OCR(par exemple : Ville non distribuable - Ville Distribuable - Voie Numérotée - Boîte Postale - Voie non Numérotée - Pas de Porte) qui correspondent à différents types de points de distribution postale, ladite matrice contenant des valeurs de performance calculées à partir de relevés de conformité pour chaque catégorie de décisions et pour chaque niveau de décision,

**en ce que** pour chaque résultat OCR, on identifie la catégorie de décisions à laquelle correspond ledit résultat d'OCR et on récupère les valeurs de performance correspondantes dans la matrice de confusion associée à l'OCR pour produire des fonctions/masses de croyance (m1,m2,m3) attribuée à cette catégorie de décisions pour le niveau de décision auquel correspond ledit résultat OCR mais également des fonctions/masses de croyance (m1,m2,m3) attribuées à cette catégorie de décisions pour des niveaux de décision intermédiaires supérieurs audit niveau de décision en considérant ledit modèle hiérarchique de décisions,

**en ce que** on fusionne lesdites fonctions/masses de croyance (m1,m2,m3) produites sur la base des résultats d'OCR en une fonction/masse de croyance résultante (m) laquelle est transformée (4) en une mesure de probabilité pour décider du résultat global d'adresse postale.

2. La méthode selon la revendication 1, dans laquelle lesdites fonctions de croyance (m1,m2, m3) sont fusionnées (3) par une combinaison conjonctive de Dempster Shafer.

3. La méthode selon l'une des revendications 1 à 2, dans laquelle les résultats produits par les OCR postaux (LAP1, LAP2, LAP3) comprennent des résultats dérivés (résultats obtenus à partir d'informations textuelles reconnues par OCR sans avoir été décidés par l'OCR après extraction dans la base d'adresses valides)

4. La méthode selon l'une des revendications 1 à 3, dans laquelle les résultats produits par les OCR postaux (LAP1, LAP2, LAP3) comprennent des résultats filtrés (codes d'indexation complets ou partiels qui suivent dans l'ordre décroissant de fiabilité le code d'indexation produit par l'OCR).

5. La méthode selon l'une des revendications 1 à 4, dans laquelle on exploite des scores associés audits résultats d'OCR pour générer (61,62) les fonctions/masses de croyance.

6. La méthode selon l'une des revendications 1 à 5, dans laquelle on exploite (4) des valeurs représentatives de coûts de distribution postale pour décider d'un résultat globale d'adresse postale.

7. Un système pour mettre en oeuvre la méthode selon l'une des revendications 1 à 6, **caractérisé en ce que** lesdits OCR postaux font partie d'un même lecteur d'adresses postales incluant une caméra pour former une image d'un envoi postal courant, lesdits OCR postaux en parallèle produisant lesdits résultats d'adresse postale pour un envoi à partir d'une même image de l'envoi.

8. Un système pour mettre en oeuvre la méthode selon l'une des revendications 1 à 6, **caractérisé en ce qu'**il comprend plusieurs lecteurs d'adresses postales incluant chacun une caméra et un OCR postal, les dits lesdits OCR postaux en parallèle produisant lesdits résultats d'adresse postale pour un envoi à partir de plusieurs images de l'envoi.

**Claims**

1. A method for decoding postal address on postal items images (1) with several parallel postal OCR processing (LAP1, LAP2, LAP3), in which OCR results comprise complete decisions, partial decisions or complete rejecting decisions which are merged for deciding a postal address global result, **characterized :**

**in that** said OCR results are merged by considering these OCR decisions in a frame of discernment with multi-level class sets of a transferable belief hierarchic model,

**in that**, from OCR results, belief functions (m1,m2,m3) are generated from confusion matrix respectively associated to OCR, each confusion matrix associated to a OCR being obtained by learning with the OCR while considering a hierarchical model of OCR decisions, corresponding to a postal delivery hierarchy, with a top level (complete rejection level) which corresponds to a complete rejection of the OCR, a lower level (delivery level) which corresponds to an OCR complete decision and intermediate level (routing level - street level) which correspond to OCR partial decisions and OCR decisions categories (for instance : non deliverable city - deliverable city - numbered route - non numbered route - post office box - door number) which correspond to different types of postal delivery points, said matrix including performance value calculated from statements of compliance for each decision category and for each decision level,

**in that** for each OCR result, the decision category to which corresponds said OCR result is identified and corresponding performance values are retrieved in the confusion matrix associated to the OCR for producing belief functions (m1,m2,m3) assigned to this decision category for the decision level to which correspond said OCR result but also belief functions (m1,m2,m3) assigned to this decision category for intermediate decision level upper than said decision level while considering said hierarchical model of decision,

**in that** said belief functions (m1,m2,m3) produced based on OCR results are merged in a resulting belief function (m) which is transformed (4) a probability measure for deciding postal address global result.

2. The method according to claim 1, in which said belief functions (m1, m2, m3) are merged (3) by a combination of evidence of Dempster-Shafer.

3. The method according to one of the claims 1 to 2, in which results produce by postal OCR (LAP1,LAP2,LAP3) comprise derived results (results obtained from text information recognized by OCR without having been decided by OCR after extraction in the valid address base).

4. The method according to one of the claims 1 to 3, in which results produced by postal OCR (LAP1,LAP2,LAP3) comprise filtered results (complete or partial index codes which follow in a decreasing order of reliability the index code produce by the OCR).

5. The method according to one of the claims 1 to 4, in which scores associated to said OCR results are used for generating (61,62) belief functions.

6. The method according to one of the claims 1 to 5, in which values representing postal delivery costs are used (4) for deciding a postal address global result.

7. A system to embody the method according to one of the claims 1 to 6, **characterized in that** said postal OCR belong to a same postal address reader including a camera for forming an image of a current postal item, said parallel postal OCR producing said postal address results for an item from a same image of the item.

8. A system to embody the method according to one of the claims 1 to 6, **characterized in that** it comprises several postal address readers each including a camera and a postal OCR, said parallel postal OCR producing said postal address results for an item from several images of the item.

**Patentansprüche**

1. Verfahren zum Dekodieren von Postadressen auf Bildern von Postsendungen (1) mit mehreren parallelen Post-OCR-Behandlungen (LAP1, LAP2, LAP3), in dem die durch die OCR gewonnenen Ergebnisse, welche vollständige Entscheidungen, Teilentscheidungen oder noch eine Entscheidung zur vollständigen Zurückweisung umfassen, zusammengeführt werden, um ein Gesamtergebnis der Postadresse zu bestimmen, **dadurch gekennzeichnet, dass**:

die Ergebnisse aus der OCR in Erwägung dieser OCR-Entscheidungen in einem Unterscheidbarkeitsrahmen mit mehreren Stufen von Klassengesamtheiten eines hierarchischen Modells von transferierbaren Beliefs zusammengeführt werden,
ausgehend von den OCR-Ergebnissen Belief-Funktionen/Mengen (m1, m2, m3) von den jeweils den OCR zugeordneten Unsicherheitsmatrizen ausgehend, generiert werden, wobei jede einer OCR zugeordnete Unsicherheitsmatrix sich durch Erlernen mit der OCR in Erwägung eines hierarchischen Modells der OCR-Entscheidungen ergibt, entsprechend einer Hierarchie der Postverteilung mit einer höheren Stufe (Stufe vollständiger Zurückweisung), welche einer vollständigen Zurückweisung der OCR entspricht, einer niedrigeren Stufe (Verteilungsstufe), welche einer vollständigen Entscheidung der OCR entspricht und Zwischenstufen (Stufe Beförderung - Stufe Strasse), welche den Teilentscheidungen der OCR entsprechen, und den Entscheidungskategorien der OCR (zum Beispiel: Stadt nicht zustellbar - Stadt zustellbar - nummerierte Strasse - Postfach - nicht nummerierte Strasse - keine Hausnummer), welche mit den verschiedenen Typen der Postverteilungspunkte übereinstimmen, wobei die Matrix ausgehend von Übereinstimmungswerten für jede Entscheidungskategorie und jede Entscheidungsstufe berechnete Leistungswerte enthält,
für jedes OCR-Ergebnis die Kategorie der Entscheidungen identifiziert wird, welche dem OCR-Ergebnis in der der OCR zugeordneten Unsicherheitsmatrix entspricht und die entsprechenden Leistungswerte gewonnen werden, um Belief-Funktionen/Mengen (m1, m2, m3) zu erzeugen, die dieser Entscheidungskategorie für die Entscheidungsstufe zugeordnet werden, welche dem OCR-Ergebnis entspricht aber unabhängig von den Belief-Funktionen/Mengen (m1, m2, m3), die dieser Entscheidungskategorie für dazwischen liegende höhere Entscheidungsstufen der Entscheidungsstufe in Erwägung des hierarchischen Entscheidungsmodells zugeordnet werden,

die auf der Grundlage der OCR-Ergebnisse erzeugten Belief-Funktionen/Mengen (m1, m2, m3) in eine resultierende Belief-Funktion/Menge (m) zusammengeführt werden, welche in ein Wahrscheinlichkeitsmaß transformiert wird (4), um das Gesamtergebnis der Postadresse zu bestimmen.

2. Verfahren gemäß Anspruch 1, in dem die Belief-Funktionen (m1, m2, m3) durch eine Konjunktionsverknüpfung nach Dempster Shafer zusammengeführt werden (3).

3. Verfahren gemäß einem der Ansprüche 1 bis 2, in dem die durch die Post-OCR erzeugten Ergebnisse (LAP1, LAP2, LAP3) abgeleitete Ergebnisse (Ergebnisse, welche sich aus den durch OCR erkannten Textinformationen ergeben, ohne nach Extrahierung in der Basis der gültigen Adressen durch OCR bestimmt worden zu sein) umfassen.

4. Verfahren gemäß einem der Ansprüche 1 bis 3, in dem die durch die Post-OCR erzeugten Ergebnisse (LAP1, LAP2, LAP3) gefilterte Ergebnisse (vollständige oder partielle Indexierungscodes, die in der Reihenfolge abnehmender Zuverlässigkeit dem durch die OCR erzeugten Indexierungscode folgen) umfassen.

5. Verfahren gemäß einem der Ansprüche 1 bis 4, in dem die mit den OCR-Ergebnissen verbundenen Ergebnisse zum Erzeugen (61, 62) der Belief-Funktionen/Mengen ausgewertet werden.

6. Verfahren gemäß einem der Ansprüche 1 bis 5, in dem die Repräsentativwerte der Postverteilungskosten zum Bestimmen eines Gesamtergebnisses der Postadresse ausgewertet (4) werden.

7. System zur Durchführung des Verfahrens gemäß einem der Ansprüche 1 bis 6, **dadurch gekennzeichnet, dass** die Post-OCR Teil desselben Lesers von Postadressen sind, welcher eine Kamera zum Abbilden eines Bildes einer aktuellen Postsendung beinhaltet, wobei die Post-OCR parallel Ergebnisse der Postadresse für eine Sendung ausgehend von demselben Bild der Sendung erzeugen.

8. System zur Durchführung des Verfahrens gemäß einem der Ansprüche 1 bis 6, **dadurch gekennzeichnet, dass** es mehrere Leser für Postadressen umfasst, welche jeder eine Kamera und eine Post-OCR beinhaltet, wobei die Post-OCR parallel Ergebnisse der Postadresse für ergebende Sendung ausgehend aus mehreren Bildern der Sendung erzeugen.

## FIG_1

Niveau Rejet complet — Rejet Complet — Exemple: ? — code partiel

Niveau ville ou Acheminement — Ville non distribuable (Exemple: 60201 — code complet) — Ville distribuable — Exemple: 60200? — code partiel

Niveau Rue — Voie numérotée — Exemple: 60200B1V? — code partiel

Niveau Distribution — Exemple: 75924RMV23 — code complet — Boîte Postale — Voie non Numérotée (60200A8Y00 — code complet) — Pas de porte — Exemple: 60200B1V17 — code complet

FIG_2

FIG_3

FIG_4

| Décisions/Vérité | $\gamma_1$ | $\gamma_2$ | $\gamma_3$ | $\gamma_4$ | $\gamma_5$ | $\gamma_6$ | $\gamma_7$ | $\gamma_8$ |
|---|---|---|---|---|---|---|---|---|
| $A_1$ = "?" | $C_{Rache}$ | $C_{Rache}$ | $C_{Rache}$ | $C_{Rache}$ | $C_{Rache}$ | $C_{Rache}$ | 0 | 0 |
| $A_2$ = "60201" | $C_{Eache}$ | $C_{Eache}$ | $C_{Eache}$ | $C_{Eache}$ | $C_{Eache}$ | 0 | $C_{Eache}$ | $C_{Eache}$ |
| $A_3$ = "60200?" | $C_{Rrue}$ | $C_{Rue}$ | $C_{Rue}$ | 0 | 0 | $C_{Eache}$ | $C_{Eache}$ | $C_{Eache}$ |
| $A_4$ = "60200 B1V?" | $C_{Rdistri}$ | 0 | 0 | $C_{Erue}$ | $C_{Erue}$ | $C_{Eache}$ | $C_{Eache}$ | $C_{Eache}$ |
| $A_5$ = "60200 B1V17" | 0 | $C_{Edistri}$ | $C_{Edistri}$ | $C_{Erue}$ | $C_{Erue}$ | $C_{Eache}$ | $C_{Eache}$ | $C_{Eache}$ |

## FIG_5

"60200B1V17"   61

MC

FIG_6

## RÉFÉRENCES CITÉES DANS LA DESCRIPTION

**Documents brevets cités dans la description**

- EP 1594077 A
- WO 2005050545 A
- US 5970171 A

**Littérature non-brevet citée dans la description**

- The Transferable Belief Model. **SMETS P. ; KENNES R.** Artificial Intelligence. 1994, vol. 66, 191-243
- A comparison of method for transforming bielief fonction models to probability models. *Symbolic and quantification approach with uncertainty, lecture notes in artificial intelligence,* 27 Novembre 2003, 255-266